# EUROPEAN PATENT APPLICATION

(11) **EP 4 101 825 A1**
(43) Date of publication of application: **14.12.2022**
(21) Application number: 21382518.5
(22) Date of filing: 11.06.2021
(51) Int. Cl.: C04B 35/111, C04B 35/117, C04B 35/14, C04B 35/16, C04B 35/185, C04B 35/565, C04B 35/571, C04B 35/584, C04B 35/638, F23D 14/14, C04B 41/87, C04B 35/626, C04B 35/634, C04B 35/636, C04B 38/06

(54) **BURNER SURFACE**

(71) Applicant: ORKLI, S. COOP., 20240 Ordizia (Gipuzkoa) (ES)
(72) Inventor: BORONAT ELIZALDE, Marco, E-20240 Ordizia, Gipuzkoa (ES); HERNÁNDEZ CONDE, Iñigo, E-20240 Ordizia, Gipuzkoa (ES); GONZÁLEZ SALVADOR, Francisco Javier, E-20240 Ordizia, Gipuzkoa (ES)
(74) Representative: ABG Intellectual Property Law, S.L.

(57) **Abstract**

The present invention refers to an infiltrated burner surface, a burner assembly and a method for the preparation of the infiltrated burner surface, the use of the burner surface and the use of the burner assembly.

## Description

### FIELD OF THE INVENTION

The present invention relates to the area of burner surfaces. More specifically, the present invention relates to an infiltrated burner surface, a burner assembly, methods for preparing the same and their uses.

### BACKGROUND

Ceramic materials have good thermal properties and are useful for several applications wherein resistance to high temperatures is required, being common materials in the composition of burner surfaces together with metals. However, burner surfaces comprising ceramic and/or metal burner plates have deficiencies related to high pressure drop or high thermal mass that cause burner inefficiency and fragility.

The use of infiltrated burner surfaces overcomes part of these issues. Patent Application EP3819280A1 describes burner surfaces which have been reinforced by liquid infiltration. However, the use of liquid infiltration methods left high amounts of infiltrated material concentrated in specific areas that after suffering form thermal expansion and contraction, might negatively affect the microstructure of the burner surface. Thus, is some applications (i.e. hydrogen combustion) a greater control of the microstructure of the final burner surface is needed.

Therefore, there is a clear need for new materials and burner surfaces with high quality, performance, improved strength and durability as well as with reduced manufacturing cost.

### BRIEF DESCRIPTION OF THE INVENTION

The authors of the present invention have developed an infiltrated burner surface, a burner assembly and a method for the preparation of the infiltrated burner surface. Additional aspects of the invention are the use of the infiltrated burner surface and the use of the burner assembly.

In particular, it has been observed that the infiltrated burner surface of the present invention has surprisingly an improved structural integrity over previous burners. In addition, the infiltrated burner surface of the present invention has a higher resistance to oxidation during combustion cycles than previous burners and, consequently, an increased working life. Moreover, the authors have observed that using gas infiltration leads to stoichiometric ceramic coatings and to a more homogeneous distribution of the ceramic infiltrations inside the burner surface than using liquid infiltration techniques. Moreover, the use of gas infiltration left small amounts of infiltrated material homogeneously distributed overcoming, thus, the issues of liquid infiltration techniques. In addition, a reduction of oxidation damage under working conditions has been observed for the infiltrated burner surface of the invention over the surfaces known in the art. Surprisingly, a greater stabilization of the infiltrated burner surface was observed by performing gas infiltration "after" the perforation of the surface. Moreover, this sequence of steps reduces the total cost of the process because less energy is needed. Additionally, it has been found that the previous advantages are observed not only when the burner surface and assembly are used in the combustion of conventional mixtures of gases but also in the combustion of hydrogen and of mixtures of gases comprising hydrogen. Finally, since the method for the preparation of a continuous composite surface of the present invention is a simple and inexpensive procedure, it can be applied for large-scale production of burner surfaces.

Therefore, a first aspect of the invention is directed to an infiltrated burner surface obtainable by the method comprising the steps of
(i) providing a dispersion comprising
   - ceramic particles; wherein said ceramic particles have an aspect ratio of below 5 (length/diameter);
   - at least one polymeric binder;
   - optionally, a pore forming precursor; and
   - a solvent;
(ii) slip casting said dispersion in a mold to obtain a structure;
(iii) heating the structure obtained in step (ii) at a temperature high enough to decompose said at least one polymeric binder to obtain a stabilized structure;
(iv) perforating the stabilized structure of step (iii) to obtain a burner surface; and
(v) infiltrating the burner surface of step (iv) with at least one preceramic precursor at a temperature of between 700 and 1500°C to obtain an infiltrated burner surface; wherein said at least one preceramic precursor is in gas or vapor phase;
wherein the infiltrated burner surface of step (v) comprises perforations, a ceramic coating and ceramic infiltrations; wherein the inner surface of the perforations is coated by the ceramic coating; and wherein the infiltrated burner surface has a porosity of between 4 and 50 % of the total volume of the infiltrated burner surface.

In a second aspect, the present invention is directed to
- a housing having a plenum chamber;
- a gas inlet port connected to the housing; and
- the infiltrated burner surface of the invention.

In another aspect the present invention is directed to a method for the preparation of the infiltrated burner surface of the invention comprising the steps of:
(i) providing a dispersion comprising
   - ceramic particles; wherein said ceramic particles have an aspect ratio of below 5;
   - at least one polymeric binder;
   - optionally, a pore forming precursor; and
   - a solvent;
(ii) slip casting said dispersion in a mold to obtain a structure;
(iii) heating the structure obtained in step (ii) at a temperature high enough to decompose said at least one polymeric binder to obtain a stabilized structure;
(iv) perforating the stabilized structure of step (iii) to obtain a burner surface; and
(v) infiltrating the burner surface of step (iv) with at least one preceramic precursor at a temperature of between 700 and 1500°C to obtain an infiltrated burner surface; wherein said at least one preceramic precursor is in gas or vapor phase.

In another aspect, the present invention is directed to the use of the infiltrated burner surface of the invention or of the burner assembly of the invention, in boilers, water heaters and/or cooking burners.

In yet another aspect, the present invention is directed to the use of the infiltrated burner surface of the invention or of the burner assembly of the invention in hydrogen based applications.

### FIGURES

Figure 1: Scanning electron microscopy micrograph of a burner surface before infiltration.
Figure 2: Scanning electron microscopy micrograph of lateral sections of an infiltrated burner surface such as (a) the lateral section of an aperture and (b) the lateral section of a continuous part of the burner surface.
Figure 3: Image of an infiltrated burner surface.

### DETAILED DESCRIPTION OF THE INVENTION

Unless defined otherwise, all technical and scientific terms used herein have the same meaning as commonly understood to one of ordinary skill in the art to which this disclosure belongs. As used herein, the singular forms "a" "an" and "the" include plural reference unless the context clearly dictates otherwise.

### Infiltrated burner surface

As defined above, a first aspect of the invention is directed an infiltrated burner surface obtainable by the method comprising the steps of
(i) providing a dispersion comprising:
   - ceramic particles; wherein said ceramic particles have an aspect ratio of below 5 (length/diameter);
   - at least one polymeric binder;
   - optionally, a pore forming precursor; and
   - a solvent;
(ii) slip casting said dispersion in a mold to obtain a structure;
(iii) heating the structure obtained in step (ii) at a temperature high enough to decompose said at least one polymeric binder to obtain a stabilized structure;
(iv) perforating the stabilized structure of step (iii) to obtain a burner surface; and
(v) infiltrating the burner surface of step (iv) with at least one preceramic precursor at a temperature of between 700 and 1500°C to obtain an infiltrated burner surface; wherein said at least one preceramic precursor is in gas or vapor phase;
wherein the infiltrated burner surface of step (v) comprises perforations, a ceramic coating and ceramic infiltrations; wherein the inner surface of the perforations is coated by the ceramic coating; and wherein the infiltrated burner surface has a porosity of between 4 and 50 % of the total volume of the burner surface.

In an embodiment, the infiltrated burner surface is obtainable by the method consisting of the steps of
(i) providing a dispersion comprising:
   - ceramic particles; wherein said ceramic particles have an aspect ratio of below 5 (length/diameter);
   - at least one polymeric binder;
   - optionally, a pore forming precursor; and
   - a solvent;
(ii) slip casting said dispersion in a mold to obtain a structure;
(iii) heating the structure obtained in step (ii) at a temperature high enough to decompose said at least one polymeric binder to obtain a stabilized structure;
(iv) perforating the stabilized structure of step (iii) to obtain a burner surface; and
(v) infiltrating the burner surface of step (iv) with at least one preceramic precursor at a temperature of between 700 and 1500°C to obtain an infiltrated burner surface; wherein said at least one preceramic precursor is in gas or vapor phase; wherein before or after step (v) there is an optional heating step at a temperature of between 700 and 2000°C during between 1 and 100 hours;
wherein the infiltrated burner surface of step (v) comprises perforations, a ceramic coating and ceramic infiltrations; wherein the inner surface of the perforations is coated by the ceramic coating; and
wherein the infiltrated burner surface has a porosity of between 4 and 50 % of the total volume of the burner surface.

In a particular embodiment, the ceramic coating coats all the surfaces of the infiltrated burner surface; particularly, including the internal surface of the perforations of the infiltrated burner surface (for example the surface of the "channels" created by the perforations).

In an additional embodiment, the infiltrated burner surface obtainable by the method comprising the steps of:
(i) providing a dispersion comprising:
   - ceramic particles; wherein said ceramic particles have an aspect ratio of below 5 (length/diameter) and an average diameter of between 2 and 200 microns;
   - at least one polymeric binder;
   - optionally, a pore forming precursor; and
   - water;
(ii) high pressure slip casting said dispersion in a mold to obtain a structure;
(iii) heating the structure obtained in step (ii) at a temperature of between 30 and 300°C to decompose said at least one polymeric binder to obtain a stabilized structure;
(iv) perforating by a laser technique the stabilized structure of step (iii) to obtain a burner surface; and
(v) infiltrating the burner surface of step (iv) with at least one preceramic precursor at a temperature of between 700 and 1500°C to obtain an infiltrated burner surface; wherein said at least one preceramic precursor is in gas or vapor phase;
wherein the infiltrated burner surface of step (v) comprises perforations, a ceramic coating and ceramic infiltrations; wherein the inner surface of the perforations is coated by the ceramic coating; and wherein the infiltrated burner surface has a porosity of between 4 and 50 % of the total volume of the burner surface.

### Step (i)

In the present invention the continuous composite surface is obtainable by the method described above that comprises a step (i) of providing a dispersion comprising
- ceramic particles; wherein said ceramic particles have an aspect ratio of below 5 (length/diameter);
- at least one polymeric binder;
- optionally, a pore forming precursor; and
- a solvent.

### Ceramic particles

In the context of the present invention, the expression "ceramic particles" refers to particles of ceramic materials such as ceramic oxides, non-oxide ceramics or combinations thereof. Non-limiting examples of "ceramic oxides" are alumina, alumina-silica, alumina-boria-silica, aluminum borosilicate, alumina-mullite, silica, zirconia, zirconia-silica, titania, titania-silica, rare earth oxides or a combination thereof. Non-limiting examples of "non-oxide ceramics" are silicon carbide, silicon carbonitride, silicon oxycarbide, silicon titanium oxycarbide, silicon nitride, aluminum nitride, silicon titanium, silicon alumina nitride or a combination thereof.

In an embodiment, the ceramic particles of step (i) are selected from silicon carbide (SiC), silicon carbonitride (SiCN), alumina (Al₂O₃), alumina-mullite, aluminum borosilicate and silica (SiO₂) particles; preferably selected from silicon carbide (SiC), silicon carbonitride (SiCN), aluminium borosilicate and silica (SiO₂) particles; more preferably silicon carbide (SiC) particles.

The ceramic particles have an aspect ratio of below 5 (length/diameter); preferably below 4; more preferably of below 3; even more preferably of below 2. The aspect ratio of a ceramic particle refers to the ratio of the length of said particle to the diameter of said particle (for example an aspect ratio of 5 can be expressed as 5:1 (length: diameter)).

In an embodiment, the ceramic particles are spherical or semispherical particles.

In another embodiment, the ceramic particles do not comprise ceramic fibers.

In a particular embodiment, the ceramic particles have an average diameter of between 1 and 500 microns; more preferably of between 2 and 200 microns; even more preferably between 3 and 150 microns; even much more preferably of between 4 and 120 microns. In the context of the present invention, the average diameter or the aspect ratio of the ceramic particles might been calculated from data from microscopy techniques or other techniques known in the art.

### Polymeric binder

In the context of the present invention, the term "binder" refers to a substance that helps the ceramic particles to stick together by adhesion or cohesion.

In a particular embodiment, the at least one polymeric binder of step (i) is a polymer selected from a carbohydrate, thermoplastic polymer, polyacrylate, polyurethane, epoxy resins, phenol resins, thermo curing resins, light sensitive resins, polyester resins and/or a combination thereof; preferably selected from a carbohydrate, thermoplastic polymer and a combination thereof.

In a particular embodiment, the carbohydrate is a monomeric or polymeric carbohydrate; more preferably cellulose, starch or dextrin; even more preferably cellulose.

In a particular embodiment, the thermoplastic polymer is selected from polyvinylalcohol (PVA), polyhydroxyethylmethacrylate polyvinylalcohol (PVA), poly(methyl methacrylate) (PMMA), polycarbonate (PC), polystyrene (PS), polypropylene (PP), polyethylene (PE), polyglycolide (PGA), poly(propylenefumarate) (PPF), polycyanoacrylate (PCA), polycaprolactone (PCL), poly(glycerol sebacate) (PGS), poly(glycerol sebacate acrylate) (PGSA), polyvinylidenefuoride (PVDF), polyvinylidene chloride (PVDC), polyethylene terephthalate (PET), polybutylene therephtalate (PBT), polyphenylene oxide (PPO), polyimide (PI), polyvinyl chloride (PVC), cellulose acetate (CA), cyclic olefin copolymer (COC), ethylene vinyl acetate (EVA), ethylene vinyl alcohol (EVOH), polytetrafluoroethylene (PTFE), fluorinated ethylene propylene (FEP), perfluoroalkoxy (PEA), ethylene tetrafluoroethylene (ETFE), polyethersulfone (PES), chlorinated poly ethylene (CPE), polylactic acid (PLA), poly 3-hydroxybutyrate (P3HB), polybutylene adipate (PBA), polyethylene adipate (PEA), polybutylene succinate (PBS), polyphenylene sulfide (PPS), polysulfone (PSU), polytrimethylene terephthalate (PTT), polyurethane (PU), polyvinyl acetate (PVA), polyvinylidene chloride (PVDC), styrene acrylonitrile (SAN), polyetherketones (PEEK), polyhydroxyethylmethacrylate (PHEMA), poly(N-isopropylacrylamide) (PNIPAAm) and mixtures thereof.

In a particular embodiment, the thermoplastic polymer is a vinyl polymer; preferably selected from polyvinyl chloride (PVC), poly(vinyl acetate) and polyvinyl alcohol (PVA); preferably polyvinyl alcohol (PVA).

In a particular embodiment, the at least one polymeric binder of step (i) is selected from polyvinyl alcohol (PVA), polyimide (PI), dextrin and cellulose; preferably selected from polyvinyl alcohol (PVA), polyimide (PI) and dextrin; more preferably polyvinyl alcohol (PVA).

In a more particular embodiment, the at least one polymeric binder is in below 40 wt% of the total weight of the solids of the dispersion; preferably below 30 wt%; more preferably below 25 wt%; more preferably below 20 wt%.

In a particular embodiment, the at least one polymeric binder is in between 0.1 and 40 wt% of the total weight of the solids of the dispersion; preferably in between 0.5 and 30 wt%; more preferably in between 1 and 25 wt%; even more preferably between 2 and 20 wt%.

In a particular embodiment, the at least one polymeric binder of step (i) is a polymer fiber.

Without being bound to any theory in particular, the authors of the present invention observed that the use of a polymeric binder improves the stability of the structure.

### Pore forming precursor

In a particular embodiment, the pore forming precursor is selected from any of the pore former precursors known in the art. In an embodiment, the pore forming precursors are carbon based pore forming precursors. Non limiting examples of pore former precursors are carbohydrates such as cellulose, starch or dextrin; resins such as acrylic resins; carbon materials such as coke; or combinations thereof.

In a more particular embodiment, the pore former precursor is in below 20 wt% of the total weight of the solids of the dispersion; preferably below 15 wt%; more preferably below 10 wt%.

### Carbon source

In a particular embodiment the dispersion of the present invention further comprises a carbon source; particularly carbon, carbon-based compound or a mixture of compounds.

In a particular embodiment, the carbon source is a resin; preferably an epoxy resin.

In a more particular embodiment, the carbon source is in below 20 wt% of the total weight of the solids of the dispersion; preferably below 15 wt%; more preferably below 10 wt%.

In a particular embodiment, the carbon source is in between 0.1 and 20 wt% of the total weight of the solids of the dispersion; preferably in between 0.5 and 15 wt%; more preferably in between 1 and 10 wt%.

### Other additives

In some embodiments, the dispersion further comprises one or more additive admixtures. In some embodiments, the one or more additive admixtures are chosen from thickeners, surfactants, and/or ceramic precursors.

In a particular embodiment, the dispersion of step (i) further comprises at least one thickener. In the context of the present invention, the term "thickener" refers to a compound that increases the density of the dispersion of step (i). Suitable thickeners according to the present invention include colloidal silica, colloidal alumina, sodium alginate (E-401), potassium alginate (E-402), ammonium alginate (E-403), calcium alginate (E-404) and mixtures thereof.

In a particular embodiment, the dispersion of step (i) further comprises at least one dispersant, preferably a surfactant. Suitable surfactants include anionic surfactants, cationic surfactants, nonionic surfactants, amphoteric surfactants or combinations thereof. Exemplary of the anionic surfactant are carboxylic acid, sulfuric acid ester, sulfonic acid, and phosphoric acid ester type surfactants. Exemplary of the cationic surfactant are amine salt, primary amine salt, secondary amine salt, tertiary amine salt, and quaternary amine salt type surfactants. Exemplary of the nonionic surfactant are ester, ester-ether, and ether type surfactants. Exemplary of the amphoteric surfactant are amino acid and sulfo-betaine type surfactants.

In a particular embodiment, the at least one dispersant is in less than a 20 wt% of the total weight of the solids of the dispersion; preferably less than a 15 wt%; more preferably less than a 12wt%.

In a particular embodiment, the at least one dispersant is in between 0.1 and 20 wt% of the total weight of the solids of the dispersion; preferably in between 0.5 and 15 wt%; more preferably in between 1 and 10 wt%.

### Solvent

Non-limiting examples of solvents suitable for the dispersion are methanol, 2-propanol, chloroform, toluene, anisole, cyclohexane, dimethyl formamide, methanol, dichloromethane, trichloroethane, water, acetone, ethyl acetate, N-methyl-2-pyrrolidone and mixtures thereof. In a particular embodiment, the dispersion comprises a solvent selected from methanol, ethanol and water; preferably water.

### Dispersion

In another particular embodiment, the dispersion of the present invention comprises an amount of solids of less than 80 wt% of the total weight of the dispersion; preferably less than 70 wt%; more preferably less than 65 wt%; even more preferably less than 60 wt%.

In a particular embodiment, the solids of the dispersion consist of all the components of the dispersion except the solvent.

In a particular embodiment, the viscosity of the dispersion was adjusted to a value of between 10 and 2000 mPa·s; preferably between 20 and 1500 mPa·s; more preferably between 50 and 1200 mPa·s. In the present invention the viscosity of the dispersion has been measured by techniques known in the art such as using a viscometer, at room temperature and atmospheric pressure; preferably at 20°C and 1 atm.

In an embodiment, the dispersion comprises:
- ceramic particles; wherein said ceramic particles have an aspect ratio of below 5 (length/diameter);
- at least one polymeric binder;
- optionally, a pore forming precursor;
- optionally, a dispersant and
- water;
wherein the dispersion comprises an amount of solids of less than 60 wt% of the total weight of the dispersion.

In a more particular embodiment, the dispersion of step (i) and (ii) is at room temperature.

In the context of the present invention, the expression "room temperature" refers to a temperature between 15 degrees (°C) and 35 °C.

In a more particular embodiment, the dispersion of steps (i) and (ii) is at a temperature between 50 and 100 °C.

In a more particular embodiment, the dispersion is at atmospheric pressure (i.e. 1 atm).

The dispersion provided in step (i) may be prepared by dispersing the ceramic particles and the at least one polymeric binder and, optionally, other additive such as a pore forming precursors, in a suitable solvent by applying energy via mechanical methods known in the art for example by means of dispersers, agitators or by ultrasonic baths and or probes. Other alternatives known in the art to prepare stable dispersions that are suitable for the invention include the addition of surface tension control additives (surfactants) to the dispersion, or modification of the ceramic particles surface by bound or unbound ligand molecules. The dispersion quality may be assessed by the stability of the dispersions during a certain time without flocculation or precipitation. In particular, the ceramic particles should not aggregate and flocculate in the time frame of the fabrication process, i.e.: from several minutes to hours. Turbidimetry or nephelometry and/or dynamic light scattering can be used for monitoring the stability of the dispersions.

The authors of the present invention have observed that the use of at least one polymeric binder in the dispersion improves the stability of said dispersion, i.e. reduces the precipitation and/or flocculation of the ceramic particles.

### Step (ii)

In the present invention the continuous composite surface is obtainable by the method described above that comprises a step (ii) of slip casting said dispersion in a mold to obtain a structure.

In the context of the present invention, the expression "slip casting" refers to the technique known in the art to make shaped ceramic materials using a mold. In an embodiment, the slip casting is pressure slip casting; preferably wherein the pressure slip casting is performed at a pressure of between 1 and 100 bar, more preferably of between 2 and 80 bar; even more preferably between 4 and 60 bar.

In another embodiment, the mold is porous comprising apertures; preferably with average aperture diameters of between 50 and 150 microns. In yet another embodiment, the mold is made of resin. The average diameters might be calculated from a significant number of measures performed by microscopy techniques known in the art.

In a particular embodiment, the pressure slip casting step comprises the following steps:
a) the dispersion is poured in a cavity of the mold; wherein the mold comprises apertures;
b) the solvent (such as water) of the dispersion is drained by being forced out of the cavity of the mold to the outside of the mold under pressure to form a structure, preferably under a pressure of between 1 and 100 bar, more preferably of between 2 and 80 bar; even more preferably between 4 and 60 bar;
c) the structure is removed from the mold.

### Structure

In an embodiment, the structure of step (ii) is a "green" ceramic structure as known in the art.

In an embodiment, the structure of step (ii) is porous; preferably has a porosity of at least 2%; preferably of at least 3%, 4% or 5% of the total volume of the structure.

In the context of the present invention the expression "porosity" in relation with any one of the structure, stabilized structure, burner surface or infiltrated burner surface, refers to a void fraction created by the pores or the interstices among the ceramic particles and is a fraction of the volume of voids over the total volume expressed as a percentage between 0% and 100%. In addition, the porosity may be calculated by a liquid displacement method, like a water displacement method, as known in the art. Therefore, in the context of the present invention, the term "pore" in singular or plural refers to the interstices among the ceramic particles. Said pores are generally created during the slip casting step of the process.

The authors of the present invention have observed that the use of slip casting allows obtaining different shaped structures. In addition, the authors have observed that the use of pressure slip casting reduces the time employed in the process over other types to techniques. Moreover the use of slip casting in the process leads to a specific microstructure on the final burner surface.

### Step (iii)

In the present invention the method described above comprises a step (iii) of heating the structure obtained in step (ii) at a temperature high enough to decompose said at least one polymeric binder to obtain a stabilized structure.

In the context of the present invention the expression "to decompose" in relation to said at least one polymeric binder refers to a thermal decomposition. Non-limiting examples of said thermal decomposition are: burning or pyrolyzing said at least one polymeric binder.

In a particular embodiment, the heating of step (iii) is performed under air.

In a particular embodiment, the heating of step (iii) is performed by burning said at least one polymeric binder.

In a particular embodiment, the heating of step (iii) is at a temperature of between 10 and 500°C; preferably of between 20 and 400°C; more preferably of between 30 and 300°C; even more preferably at between 40 and 260°C.

In a particular embodiment, the heating of step (iii) is performed during between 1 and 100 hours, preferably during between 5 and 50 hours, more preferably during between 10 and 20 hours.

In a particular embodiment, the heating of step (iii) is performed below 100 mbar, preferably at between 2 and 50 mbar, more preferably at between 5 and 30 mbar.

In a particular embodiment, the heating of step (iii) is performed in a furnace; preferably in a vacuum furnace; more preferably in a hot wall vacuum furnace; even more preferably in a chemical vapor deposition furnace.

Without being bound to any theory in particular, the authors of the present invention have observed that by decomposition of the at least one polymeric binder the thermal resistance and mechanical properties of the stabilized structure of step (iii) are improved. Moreover, the authors have observed that by selecting an specific polymeric binder the porosity of the stabilized structure may be changed.

### Step (iv)

In the present invention the continuous composite surface is obtainable by the method described above that comprises a step (iii) of perforating the stabilized structure of step (iii) to obtain a burner surface.

In an embodiment, step (iv) is performed by a laser perforation technique, preferably by a femtosecond laser.

In the context of the present invention the expression, "perforating the stabilized structure" refers to making perforations, holes, openings, apertures and/or slits in the stabilized structure.

Without being bound to any theory in particular, the authors of the present invention believe that when the perforations are created in the stabilized structure to obtain a burner surface, said perforations do not disturb the distribution of the ceramic particles, the porous or the microstructure of the stabilized structure.

In a particular embodiment, the perforation of step is performed by means of a laser equipment; preferably by means of a a femtosecond or picosecond laser machine; more preferably by means of a femtosecond laser machine.

In a particular embodiment, the perforation is performed by using a software. A non-limiting example of software suitable for the present invention is Computer Aid Design (CAD).

The authors of the invention observed that by using a femtosecond laser, the burner surface suffered less damage than using other types of laser and/or other perforation techniques.

In addition, without being bound to any theory in particular, the authors of the present invention believe that when said laser apertures have a larger diameter or opening near the top surface of the burner surface and a smaller diameter or opening near the bottom surface of the burner surface, during a combustion the flames are held closer to the top surface of the burner surface reducing the emissions generated during combustion, particularly during hydrogen combustion. Without being bound to any theory in particular, the authors of the present invention believe that the presence of apertures help to held the flame and modulating the burner combustion at different combustion conditions, particularly in the case of hydrogen combustion.

### Step (v)

In the present invention the continuous composite surface is obtainable by the method described above that comprises a step (v) of infiltrating the burner surface of step (iv) with at least one preceramic precursor at a temperature of between 700 and 1500°C to obtain an infiltrated burner surface; wherein said at least one preceramic precursor is in gas or vapor phase.

In a particular embodiment, the step (v) might comprise one or more infiltration steps; preferably more than one infiltration step; more preferably at least two infiltration steps.

In an embodiment, the infiltration is performed by vapor infiltration; preferably by chemical vapor infiltration (CVI).

In the context of the present invention the term "vapor infiltration" refers to conventional gas or vapor phase infiltration techniques such as chemical vapor infiltration or a physical vapor infiltration techniques known in the art that are able to coat, deposit and/or impregnate the surface of the burner surface and to infiltrate the burner surface with a gaseous preceramic precursor. Said preceramic precursor is able to create bridges among the ceramic particles of the infiltrated burner surface.

In a particular embodiment, the infiltration is performed at a temperature of between 800 and 1300 °C, more preferably between 850 and 1250 °C; more preferably of between 900 and 1200°C.

In a particular embodiment, the infiltration is performed during between 1 and 100 hours, preferably during between 5 and 80 hours, more preferably during between 10 and 60 hours.

In a particular embodiment, the infiltration is performed at a pressure below 200 mbar, preferably between 2 mbar and 150 mbar, more preferably between 5 mbar and 100 mbar.

In a particular embodiment, the infiltration is performed under inert atmosphere, preferably under N₂ or Ar gas; more preferably under N₂.

Each of the infiltrations of step (v) may have the temperature, time and pressure conditions described above; or a combination of any of the mentioned conditions.

In a particular embodiment, step (v) comprises an additional heating step at a temperature of between 700 and 2000°C, preferably performed during between 1 and 100 hours, before or after the infiltration step(s); preferably before the infiltration step(s); more preferably between 800 and 1900 °C and during between 5 and 50 hours, even more preferably during between 10 and 50 hours. In a particular embodiment, additional heating step of step (v) is performed under inert gas or under air; preferably under inert gas; more preferably under N₂ gas.

In the context of the present invention the term "pyrolyzing" refers to the thermal decomposition of organic materials in an inert atmosphere by pyrolysis that usually leaves pyrolytic carbon as residue. In an embodiment, during step (v) the at least one polymeric binder is pyrolized.

In a particular embodiment, step (v) is performed in a furnace; preferably in a vacuum furnace; more preferably in a hot wall vacuum furnace; even more preferably in a chemical vapor deposition furnace.

### Preceramic precursor

The preceramic precursor is able to form a ceramic material as a result of its decomposition, particularly at high temperatures.

In an embodiment, the at least one preceramic precursor is in gas or vapor phase; preferably is a gaseous preceramic precursor.

In an embodiment, the at least one preceramic precursor is a precursor of ceramic oxides, non-oxide ceramics or combinations thereof.

In an embodiment, the at least one preceramic precursor comprises an element selected from the list consisting of Si, Al, Zr, Ti, C and a combination thereof; preferably selected from the list consisting of Si, Al, C and a combination thereof; more preferably selected from the list consisting of Si, C and a combination thereof. In a particular embodiment, the preceramic precursor further comprises H and/or CI.

### Organic preceramic precursor

In a particular embodiment, the at least one preceramic precursor comprising C is an organic molecule; preferably an aliphatic or aromatic molecule; more preferably an aliphatic molecule; more preferably an alkane; even more preferably an alkane having between 1 and 10 carbon atoms; even more preferably is an alkane having between 1 and 5 carbon atoms; even much more preferably is propane.

Non-limiting examples of the at least one preceramic precursor comprising C are methane, ethane, propane, butane, pentane and hexane.

### Metal, semimetal or semiconductor precursor

In an embodiment, the at least one preceramic precursor is a metal, semimetal or semiconductor compound. In an embodiment, the metal, semimetal or semiconductor element of the metal, semimetal or semiconductor compound is selected from the list consisting of Si, Al, Zr, Ti or a combination thereof; preferably Si or Al; more preferably Si.

In an embodiment, the at least one preceramic precursor is a metal, semimetal or semiconductor compound selected from halides, alkoxides, alkyls, diketonates, alkylamides, amidinates and aryls; preferably wherein the metal, semimetal or semiconductor compound is selected from the list consisting of Si, Al, Zr, Ti or a combination thereof; preferably Si or Al; more preferably Si.

In a more particular embodiment, the at least one preceramic precursor is a Si, Al, Zr or Ti compound.

In an embodiment, the Si compound is a silicon hydride, a silicon halide or an organosilicon compound. In a more particular embodiment, the organosilicon compound is a silane or silane derivative. In a more particular embodiment, the organosilicon compound is selected from the group consisting of alkylsilanes, alkylarylsilanes, alkoxysilanes, organoheterosilanes, silyl ethers, N-silyl compounds, silanols, silazanes, siloxanes, their derivatives and combinations thereof; preferably is a silane derivative; more preferalby a clorosilane; even more preferalby is methyltrichlorosilane.

Non-limiting examples of the Si compound are silanols such as trimethylsilanol, triethylsilanol, 1 tris(tert-butoxy)silanol or tris(tert-pentoxy)silanol; silanes such as (3-aminopropyl)triethoxysilane, nitrilotris(trimethylsilane), chloropentamethyldisilane, tetraethylsilane, methyltrichlorosilane, dichlorotetramethyldisilane, dodecamethylcyclohexasilane, disilane; tetramethyldisilane, pentamethyldisilane, hexamethyldisilane, N,N',N'-tri-tert-butylsilanetriamine or; silazanes such as 1,3-diethyl-1,1,3,3-tetramethyldisilazane or hexamethyldisilazane; siloxanes such as 2,4,6,8,10-pentamethylcyclopentasiloxane, 2,4,6,8-tetramethylcyclotetrasiloxane and silicon halides such as silicon tetrabromide or silicon tetrachloride.

Non-limiting examples of the Al compound are trimethylaluminum, triisobutylaluminum, aluminum tris(2,2,6,6-tetramethyl-3,5-heptanedionate), tris(dimethylamido)aluminum or aluminum trichloride.

Non-limiting examples of the Zr compound are bis(cyclopentadienyl)zirconium(IV), bis(cyclopentadienyl)dimethylzirconium, bis(methyl-η⁵-cyclopentadienyl)methoxymethylzirconium, dimethylbis(pentamethylcyclopentadienyl)zirconium(IV), tetrakis(diethylamido)zirconium(IV), tetrakis(dimethylamido)zirconium(IV), tetrakis(ethylmethylamido)zirconium(IV), zirconium(IV) dibutoxide(bis-2,4-pentanedionate), zirconium(IV) 2-ethylhexanoate or zirconium tetrakis(2,2,6,6-tetramethyl-3,5-heptanedionate).

Non-limiting examples of the Ti compound are tetrakis(diethylamido)titanium(IV), tetrakis(dimethylamido)titanium(IV), tetrakis(ethylmethylamido)titanium(IV), titanium(IV) diisopropoxide bis(2,2,6,6-tetramethyl-3,5-heptanedionate), titanium(IV) isopropoxide or titanium tetrachloride.

In a more particular embodiment, the step (v) comprises the following steps:
a) infiltrating with an organic molecule in gas or vapor phase at a temperature of between 700 and 1500°C; and
b) infiltrating with a metal, semimetal or semiconductor compound in gas or vapor phase at a temperature of between 700 and 1500°C to obtain an infiltrated burner surface; and
   optionally, wherein step (v) further comprises a heating step at a temperature of between 700 and 2000°C before or after the infiltration step(s).

In a more particular embodiment, the step (v) consist of the following steps:
a) infiltrating with an organic molecule in gas or vapor phase at a temperature of between 700 and 1500°C; and
b) infiltrating with a metal, semimetal or semiconductor compound in gas or vapor phase at a temperature of between 700 and 1500°C to obtain an infiltrated burner surface; and
   optionally, wherein step (v) further comprises a heating step at a temperature of between 700 and 2000°C before or after the infiltration step(s).

In a more particular embodiment, the step (v) comprises the following steps:
a) infiltrating with an alkane in gas or vapor phase at a temperature of between 700 and 1500°C; and
b) infiltrating with a metal, semimetal or semiconductor compound in gas or vapor phase at a temperature of between 700 and 1500°C to obtain an infiltrated burner surface; and
   optionally, wherein step (v) further comprises a heating step at a temperature of between 700 and 2000°C during between 1 and 100 hours before or after the infiltration step(s);
   wherein the metal, semimetal or semiconductor compound is selected from the group consisting of Si, Al, Zr or Ti; preferably Si or Al; more preferably Si.

In a particular embodiment, step (v) can be repeated at least once; preferably at least twice; more preferably at least 5 times.

### Burner surface

The infiltrated burner surface of the invention-obtainable by the method of the invention-comprises perforations, a ceramic coating and ceramic infiltrations; wherein the inner surface of the perforations is coated by the ceramic coating; and wherein the infiltrated burner surface has a porosity of between 4 and 50 % of the total volume of the burner surface.

In a particular embodiment, the infiltrated burner surface of the present invention comprises at least 100 perforations; preferably at least 300 perforations; more preferably at least 800 perforations.

The number or pattern of perforations in the infiltrated burner surface of the present invention may be tailored to provide the desired efficiency for the application.

In a more particular embodiment, the perforations of the infiltrated burner surface of the present invention have a continuous or discontinuous diameter throughout its length; preferably a continuous diameter.

In an embodiment the averaged diameter of the perforations of the infiltrated burner surface is below 2 mm; preferably below 1.5 mm; more preferalby below 1 mm; even more preferably below 0.8 mm; much more preferably below 0,5 mm

In a particular embodiment, the perforations of the infiltrated burner surface are cylindrical or conical; preferably conical. In a particular embodiment, the perforations of the burner surface of the present invention have a larger diameter or opening near the top surface of the burner surface and a smaller diameter or opening near the bottom surface.

In a more particular embodiment, the perforations of the infiltrated burner surface of the present invention are less than 40% of the total volume of the infiltrated burner surface; preferably less than 30%, more preferably less than 250%, even more preferably less than 20%.

In a particular embodiment, the perforations of the infiltrated burner surface of the present invention follow a pattern or a logo. For example, patterns or logos can be used to adjust the efficiency, change the pressure drop, and/or strengthen the burner surface without changing the overall size of the burner surface.

In a particular embodiment, the ceramic coating of the infiltrated burner surface has a thickness of below 50 microns; preferably of below 30 microns; more preferably of below 10 micron; even much more preferably below 5 microns.

In a particular embodiment, the ceramic coating of the infiltrated burner surface has a thickness of between 0.01 and 50 microns; preferably of between 0.05 and 30 microns; more preferably of between 0.08 and 10 microns; even more preferably of between 0.1 and 5 micron.

In a particular embodiment, the ceramic coating of the invention covers all the surface of the infiltrated burner surface, including the inner surface of the perforations.

The authors of the present invention have observed that the combination of the coating of all the surface of the infiltrated burner surface with a ceramic coating (including the inner surface of the perforations) and the infiltrations, the resistance of the burner surface to high temperatures and oxidation is improved.

In a particular embodiment, the infiltrated burner surface comprises homogeneously distributed ceramic infiltrations; preferably through all its thickness; more preferably from one side to the infiltrated burner surface to the opposite side of the infiltrated burner surface.

In a particular embodiment, the ceramic infiltrations are distributed through all the thickness of the infiltrated burner surface.

In an embodiment, the ceramic coating and the ceramic infiltrations of the infiltrated burner surface comprise comprises an element selected from the list consisting of Si, Al, Zr, Ti, C and a combination thereof; preferably selected from the list consisting of Si, Al, C and a combination thereof; more preferably selected from the list consisting of Si, C and a combination thereof.

In a particular embodiment, the ceramic coating and the ceramic infiltrations of the infiltrated burner surface comprise ceramic oxides, non-oxide ceramics or combinations thereof; preferably comprise silicon carbide (SiC), silicon carbonitride (SiCN), alumina (Al₂O₃), alumina-mullite, aluminum borosilicate, silica (SiO₂) or combinations thereof; preferably silicon carbide (SiC), silicon carbonitride (SiCN), aluminium borosilicate, silica (SiO₂) or combinations thereof; more preferably silicon carbide (SiC).

In a more particular embodiment, the ceramic coating and the ceramic infiltrations of the infiltrated burner surface consist of ceramic oxides, non-oxide ceramics or combinations thereof; preferably consist of a material selected from selected from silicon carbide (SiC), silicon carbonitride (SiCN), alumina (Al₂O₃), alumina-mullite, aluminum borosilicate, silica (SiO₂) or combinations thereof; preferably selected from silicon carbide (SiC), silicon carbonitride (SiCN), aluminium borosilicate, silica (SiO₂) or combinations thereof; more preferably silicon carbide (SiC).

In a particular embodiment, the infiltrated burner surface comprises additional ceramic coatings and/or ceramic infiltrations.

In a particular embodiment, the infiltrated burner surface has a porosity of between 4 and 50 % of the total volume of the burner surface; preferably of between 5 and 35 %; more preferably of between 6 and 30 %.

In a particular embodiment, the infiltrated burner surface further comprises the ceramic particles of the invention as defined in any of the particular embodiments described above regarding step (i).

The authors of the present invention have observed that the choice of the shape and/or diameters of the ceramic particles leads to a certain porosity and microstructure of the final burner surface.

In addition, the authors of the present invention have observed that the ceramic infiltrations of the infiltrated burner surface act as bridges between the ceramic particles, reinforcing the microstructure of the burner surface and the resistance of the burner surface to high temperatures and oxidation.

In a more particular embodiment, the burner surface comprises a pyrolytic carbon residue; preferably comprises between 0.1 and 10 wt% of the total weight of the burner surface; more preferably between 1 and 60 wt% pyrolytic carbon residue of the initial total weight of the at least one polymeric binder; preferably between 2 and 20 wt%.

In a particular embodiment when the at least polymeric first binder is poly(vinyl alcohol)(PVA) or dextrin, the carbonaceous residue left is below 20 wt% of the initial total weight of the at least one polymeric binder; preferably below 10 wt%; more preferably below 5 wt%.

In a particular embodiment when the at least polymeric first binder is polyimide, the carbonaceous residue left is below 70 wt% of the initial total weight of the at least one polymeric binder; preferably between 20 and 70 wt%; more preferably between 30 and 60 wt%.

### Burner assembly

In another aspect, the present invention is directed to a burner assembly comprising
- a housing having a plenum chamber;
- a gas inlet port connected to the housing; and
- the infiltrated burner surface as defined in any of the embodiments above.

In the context of the present invention the expressions "plenum chamber", "gas inlet port" have the meanings commonly known in the art. In a particular embodiment, a plenum chamber is a pressurized housing containing a fluid (typically gas) at positive pressure.

In a particular embodiment, the burner assembly is a combustion burner assembly.

In a particular embodiment, the burner assembly of the present invention is a hydrogen or hydrogen-mixture combustion burner assembly.

### Method

In another aspect, the present invention is directed to a method for the preparation of the infiltrated burner surface of the invention comprising the steps of:
(i) providing a dispersion comprising
   - ceramic particles; wherein said ceramic particles have an aspect ratio of below 5;
   - at least one polymeric binder;
   - optionally, a pore forming precursor; and
   - a solvent;
(ii) slip casting said dispersion in a mold to obtain a structure; preferably by high pressure slip casting;
(iii) heating the structure obtained in step (ii) at a temperature high enough to decompose said at least one polymeric binder to obtain a stabilized structure; preferably at a temperature of below 400°C;
(iv) perforating the stabilized structure of step (iii) to obtain a burner surface; preferably by a laser perforation technique; and
(v) infiltrating the burner surface of step (iv) with at least one preceramic precursor at a temperature of between 700 and 1500°C to obtain an infiltrated burner surface; wherein said at least one preceramic precursor is in gas or vapor phase.

In a particular embodiment, the method of the invention consists of the steps of
(i) providing a dispersion comprising:
   - ceramic particles; wherein said ceramic particles have an aspect ratio of below 5 (length/diameter);
   - at least one polymeric binder;
   - optionally, a pore forming precursor; and
   - a solvent;
(ii) slip casting said dispersion in a mold to obtain a structure;
(iii) heating the structure obtained in step (ii) at a temperature high enough to decompose said at least one polymeric binder to obtain a stabilized structure;
(iv) perforating the stabilized structure of step (iii) to obtain a burner surface; and
(v) infiltrating the burner surface of step (iv) with at least one preceramic precursor at a temperature of between 700 and 1500°C to obtain an infiltrated burner surface; wherein said at least one preceramic precursor is in gas or vapor phase; and
wherein before or after step (v) there is an optional heating step at a temperature heating step at a temperature of between 700 and 2000°C during between 1 and 100 hours.

In a more particular embodiment, the method comprises the steps of
(i) providing a dispersion comprising:
   - ceramic particles; wherein said ceramic particles have an aspect ratio of below 5 (length/diameter) and an average diameter of between 2 and 200 microns;
   - at least one polymeric binder;
   - optionally, a pore forming precursor; and
   - water;
(i) pressure slip casting said dispersion in a mold to obtain a structure;
(ii) heating the structure obtained in step (ii) at a temperature of between 30 and 300°C to decompose said at least one polymeric binder to obtain a stabilized structure;
(iii) perforating the stabilized structure of step (iii) to obtain a burner surface by a laser technique; and
(iv) infiltrating the burner surface of step (iv) comprising the following steps:
   a) infiltrating with an organic molecule in gas or vapor phase at a temperature of between 700 and 1500°C; and
   b) infiltrating with a metal, semimetal or semiconductor compound in gas or vapor phase at a temperature of between 700 and 1500°C to obtain an infiltrated burner surface; and
      optionally, wherein step (v) further comprises a heating step at a temperature of between 700 and 2000°C before or after the infiltration step(s) (a) or (b);
   wherein the infiltrated burner surface of step (v) comprises perforations, a ceramic coating and ceramic infiltrations; wherein the inner surface of the perforations is coated by the ceramic coating; and wherein the infiltrated burner surface has a porosity of between 4 and 50 % of the total volume of the burner surface.

The method of the present invention includes all particular embodiments, characteristics, options and definitions described above for the product by process defined infiltrated burner surface, in particular those directed to steps (i), (ii), (iii), (iv) and (v).

### Uses

In another aspect, the present invention is directed to the use of an infiltrated burner surface as defined in any of the embodiments above in boilers, water heaters and/or cooking burners using a gas or a mixture of gases; but preferably using hydrogen or mixtures of gases comprising hydrogen.

In another aspect, the present invention is directed to the use of a burner assembly as defined in any of the embodiments above in boilers, water heaters and/or cooking burners using a gas or a mixture of gases; preferably using hydrogen or mixtures of gases comprising hydrogen.

In a particular embodiment, the mixture of gases is a mixture of gases comprising a hydrocarbon or hydrogen; preferably is a hydrocarbon/air mixture or a hydrogen/air mixture. Non limited examples of hydrocarbons suitable for the present invention are propane, butane or methane.

In another aspect, the present invention is directed to the use of an infiltrated burner surface as defined in any of the embodiments above in hydrogen based applications; preferably in hydrogen based combustion.

In another aspect, the present invention is directed to the use of a burner assembly as defined in any of the embodiments above in in hydrogen based applications; preferably in hydrogen based combustion.

The burner assembly, the method for the preparation of the infiltrated burner surface, the use of the infiltrated burner surface and the use of a burner assembly present all the advantages and characteristics as defined above for the infiltrated burner surface of the present invention in any of its embodiments.

As used herein, the terms "about" or "around" means a slight variation of the value specified, preferably within 10 percent of the value specified. Nevertheless, the term "about" or the term "around" can mean a higher tolerance of variation depending on for instance the experimental technique used. Said variations of a specified value are understood by the skilled person and are within the context of the present invention. Further, to provide a more concise description, some of the quantitative expressions given herein are not qualified with the term "about". It is understood that, whether the term "about" is used explicitly or not, every quantity given herein is meant to refer to the actual given value, and it is also meant to refer to the approximation to such given value that would reasonably be inferred based on the ordinary skill in the art, including equivalents and approximation due to the experimental and/or measurement conditions for such given value.

All the features described in this specification (including the claims, description and drawings) and/or all the steps of the described method can be combined in any possible combination, with the exception of combinations of such mutually exclusive features and/or steps. The invention will be further illustrated by means of examples which should not be interpreted as limiting the scope of the claims.

### EXAMPLES

The invention is illustrated by means of the following examples which in no case limit the scope of the invention.

### Example 1: Preparation of a infiltrated burner surface.

A continuous composite surface was prepared as follows.

A dispersion was made comprising Alfa-Silicon carbide (SiC) ceramic particles obtained under the trademark designation "SIC-HF" powders from H.C. Starck GmbH Company were used. The Alfa-Silicon carbide (SiC) ceramic particles were dispersed in water. The amount of SiC particles was between 40 and 98 wt% of the total amount of solids of the final dispersion. Poly(vinyl alcohol)(PVA) (less than 20 wt% of the total amount of solids) as binder, dispersants (between 1 and 10 wt% of the total amount of solids) and a carbon source (less than 10 wt% of the total amount of solids) were also added to the dispersion. In the dispersion, the total amount of solids is below 60 wt% of the total final weight of the dispersion. The viscosity of the dispersion was adjusted to a value between 50 mPa-seg a 1200 mPa-seg. Alternatively, dextrin or epoxy resins were also used as binders

Then, a structure comprising the ceramic particles and PVA with a thickness of between 1-5 mm was formed by pressure slip casting the dispersion in a mould during 20-250 seconds (at a pressure of between 5 and 40 bar).

The structure was stabilized under heating at a temperature between 50 and 250 °C to obtain a stabilized structure. The authors have observed that the stabilized structure comprises a non-full dense packing of ceramic particles, binder and residues of the binder left after its stabilization.

Then, the stabilized structure was perforated by a laser machine (TruMatic model from Trumpf Company) that uses a picosencond laser or a Laser Machine that uses a femtosecond laser to obtain burner surfaces. Different aperture shapes and diameters, and complex patterns were done by laser perforation. For example, conical-shaped perforations and perpendicular and tangential perforations to the burner surface were made. The authors of the invention observed that by using a femtosecond laser, the burner surface suffered less damage than using other types of laser and/or other perforation techniques.

The burner surface was heated at temperatures of between 900°C and 1100°C in a low pressure conditions (between 20 mbar and 100 mbar) during 10 and 60 hours. Then, a chemical vapour infiltration (CVI) step was performed using propane as carbon precursor in an inert gas flow. Methane was also tested as carbon precursor. As consequence of said infiltration step the burner surface was coated with a pyrolytic carbon coating with a thickness in the range of 0.1 microns to 0.4 microns and infiltrated. A second coating/infiltration step was performed using a preceramic precursor such as methyltrichlorosilane (MTS) using similar temperatures and pressures on than during the first infiltration step. Then, a coated and infiltrated burner surface was obtained. The infiltrated burner surface had a porosity of less than 30 % of the total volume of the surface measured by both optical and scanning electron microscopy (SEM) techniques.

The authors have observed that a first pyrolytic carbon coating/infiltration step improves the performance of subsequent infiltration and/or coating steps of preceramic precursors, in particular of Si-based precursors.

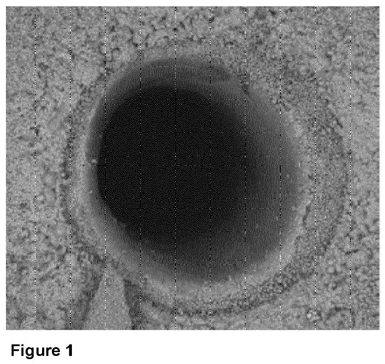

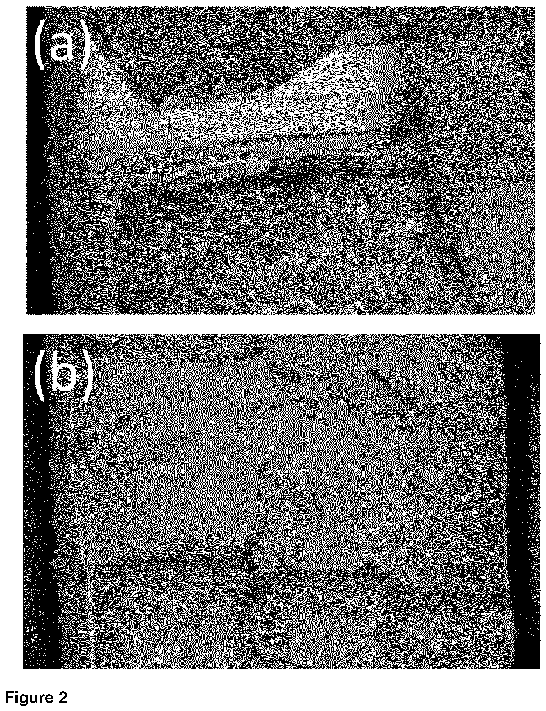

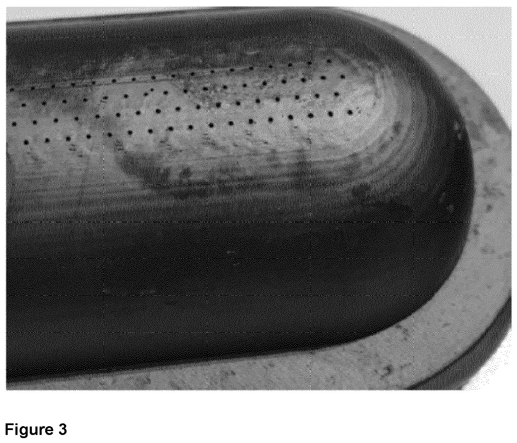

Figure 1 shows a scanning electron microscopy micrograph of an opening in a burner surface before the infiltration step. Figure 2 shows scanning electron microscopy micrographs of lateral sections of an infiltrated burner surface such as (a) the lateral section of an aperture and (b) the lateral section of a continuous part of the burner surface. Results showed that the external surface of the burner surface and the inner surface of the perforations are coated with a continuous homogeneous ceramic coating. In addition, homogeneous ceramic infiltrations can be seen through the whole thickness of the burner surface. Moreover, the infiltrated burner surfaces showed in the scanning electron microscopy micrographs have a highly packaged microstructure that leads to lower porosity values than other burner surfaces of the art. Figure 3 shows an image of an infiltrated burner surface.

The authors of the present invention have observed that the final porosity and microstructure of the infiltrated burner surfaces obtainable by the method of the invention, might be modulated by modifying the ceramic particles characteristics and the number of coating/infiltration steps.

The obtained burner surfaces showed improved mechanical properties and stability at high temperatures overtime over non-infiltrated burner surfaces and over burner surfaces infiltrated "before" perforation. In addition, by performing gas infiltration "after" perforation of the surface, an enhanced stabilization of the burner structure was observed. In particular, the ceramic infiltrations act as "bridges" between the ceramic particles of the burner surface. The authors have observed that the ceramic coating generated in the interior surface of the perforations by the chemical vapor infiltration (CVI) step reduce the average diameters of said perforations in less than a 5% of the initial value but increases the resistance of the surface to high temperatures.

Moreover, the authors have observed that using gas infiltration leads to stoichiometric ceramic coatings and to a more homogeneous distribution of the ceramic infiltrations inside the surface than using liquid infiltration techniques. In addition, a reduction of oxidation damage under working conditions has been observed for the infiltrated burner surface of the invention over the surfaces known in the art.

## Claims

1. An infiltrated burner surface obtainable by the method comprising the steps of
(i) providing a dispersion comprising
- ceramic particles; wherein said ceramic particles have an aspect ratio of below 5 (length/diameter);
- at least one polymeric binder;
- optionally, a pore forming precursor; and
- a solvent;
(ii) slip casting said dispersion in a mold to obtain a structure; preferably by high pressure slip casting;
(iii) heating the structure obtained in step (ii) at a temperature high enough to decompose said at least one polymeric binder to obtain a stabilized structure; preferably at a temperature of below 400°C;
(iv) perforating the stabilized structure of step (iii) to obtain a burner surface; preferably by a laser perforation technique; and
(v) infiltrating the burner surface of step (iv) with at least one preceramic precursor at a temperature of between 700 and 1500°C to obtain an infiltrated burner surface; wherein said at least one preceramic precursor is in gas or vapor phase;
wherein the infiltrated burner surface of step (v) comprises perforations, a ceramic coating and ceramic infiltrations; wherein the inner surface of the perforations is coated by the ceramic coating; and wherein the infiltrated burner surface has a porosity of between 4 and 50 % of the total volume of the infiltrated burner surface.

2. The infiltrated burner surface according to claim 1, wherein the ceramic particles have an average diameter of between 2 and 200 microns.

3. The infiltrated burner surface according to any of claims 1 or 2, wherein the ceramic particles are made of ceramic oxides, non-oxide ceramics or combinations thereof; preferably are made of silicon carbide (SiC), silicon carbonitride (SiCN), alumina (Al₂O₃), alumina-mullite, aluminum borosilicate and silica (SiO₂).

4. The infiltrated burner surface according to any of claims 1 to 3, wherein the averaged diameter of the perforations is below 2 mm.

5. The infiltrated burner surface according to any of claims 1 to 4, wherein the infiltrated burner surface comprises pyrolytic carbon residue in an amount of between 0.1 and 10 wt% of the total weight of the infiltrated burner surface.

6. The infiltrated burner surface according to any of claims 1 to 5, wherein the ceramic coating has a thickness of between 0.01 and 30 microns.

7. The infiltrated burner surface according to any of claims 1 to 6, wherein the infiltrated burner surface comprises homogeneously distributed ceramic infiltrations through all its thickness; and/or, wherein the ceramic coating and the ceramic infiltrations comprise Si.

8. The infiltrated burner surface according to any of claims 1 to 7, having a porosity of between 5 and 35% of the total volume of the infiltrated burner surface.

9. A burner assembly comprising
- a housing having a plenum chamber;
- a gas inlet port connected to the housing; and
- the infiltrated burner surface as defined in any of claims 1 to 8.

10. A method for the preparation of the infiltrated burner surface according to any of claims 1 to 8 comprising the steps of:
(i) providing a dispersion comprising
- ceramic particles; wherein said ceramic particles have an aspect ratio of below 5;
- at least one polymeric binder;
- optionally, a pore forming precursor; and
- a solvent;
(ii) slip casting said dispersion in a mold to obtain a structure; preferably by high pressure slip casting;
(iii) heating the structure obtained in step (ii) at a temperature high enough to decompose said at least one polymeric binder to obtain a stabilized structure; preferably at a temperature of below 400°C;
(iv) perforating the stabilized structure of step (iii) to obtain a burner surface; preferably by a laser perforation technique; and
(v) infiltrating the burner surface of step (iv) with at least one preceramic precursor at a temperature of between 700 and 1500°C to obtain an infiltrated burner surface; wherein said at least one preceramic precursor is in gas or vapor phase.

11. The method according to claim 10, wherein step (v) comprises
- a first infiltration step with a preceramic precursor comprising C; and
- a second infiltration step with a preceramic precursor comprising Si.

12. The method according to any of claims 10 or 11, wherein the infiltration is performed by vapor infiltration; preferably by chemical vapor infiltration.

13. The method according to any of claims 10 to 11, wherein step (v) comprises a heating step at a temperature of between 700 and 2000°C during between 1 and 100 hours before or after the infiltration step(s).

14. Use of the infiltrated burner surface as defined in any of claims 1 to 8 or of the burner assembly as defined in claim 9, in boilers, water heaters and/or cooking burners preferably using a gas or a mixture of gases; more preferably using hydrogen or mixtures of gases comprising hydrogen.

15. Use of the infiltrated burner surface as defined in any of claims 1 to 8 or of the burner assembly as defined in claim 9 in hydrogen based applications; preferably in hydrogen combustion applications.
